# EUROPEAN PATENT SPECIFICATION

(11) **EP 4 378 839 B1**
(45) Date of publication and mention of the grant of the patent: **31.12.2025**
(21) Application number: 23209294.0
(22) Date of filing: 13.11.2023
(51) Int. Cl.: B65B 1/06, B65B 39/00, B65G 65/23, B65G 47/90

(54) **APPARATUS FOR FILLING FOOD PACKAGES**
VORRICHTUNG ZUM FÜLLEN VON LEBENSMITTELVERPACKUNGEN
APPAREIL POUR REMPLIR DES EMBALLAGES ALIMENTAIRES

(30) Priority: 30.11.2022 EP 22210708
(43) Date of publication of application: 05.06.2024
(73) Proprietor: Tetra Laval Holdings & Finance S.A., 1009 Pully (CH)
(72) Inventor: Larsson, Peter, 22186 Lund (SE); Nilsson, Fredrik, 22186 Lund (SE); Kristersen, Kenneth, 22186 Lund (SE); Olsson, Johan, 22186 Lund (SE)
(74) Representative: Tetra Pak Patent Attorneys

(56) References cited:
- EP-A2- 0 490 084
- DE-A1- 1 558 575
- DE-A1- 102015 209 629

## Description

### Technical Field

The disclosure generally relates to an apparatus for filling food packages. More particularly, it is related to an apparatus for filling food packages comprising a manipulator and drive units.

### Background

It is commonly known to use different types of filling machines in the food processing industry for filling food product in food packages. Such filling machines typically comprises an apparatus for filling food product into the food package in a safe and accurate way. Equipment used in the food processing industry have to be designed such that it fulfills hygienic requirements. Equipment used in the food processing industry have also to be designed such that the filling of food product is provided in an easy and efficient way.

DE 10 2015 209629 A1 discloses a filling device having a manipulator having a single arm able to overturn a container and fill a bag from the container.

Even though food processing equipment and especially filling machines have been used in the food processing industry for decades, there is room for improvements for obtaining a more easy and efficient filling machine for different types of food products. There is further room for improvements for obtaining a more accurate filling machine for different types of food.

For these reasons, there is a demand for an improved apparatus for filling food product in a food package, wherein the filling of food product is provided in an easy, efficient but also accurate way independently of the type of food product.

### Summary

It is an object to at least partly overcome one or more of the above-identified limitations of the prior art. In particular, it is an object to provide an apparatus which is capable of filling different types of food products in a food package in an easy, efficient but also accurate way, independently of the type of food product.

Another object is to provide such an apparatus with improved flexibility.

Another object is to provide such an apparatus with increased cost-efficiency.

According to a first aspect it is provided an apparatus for filling food packages, the apparatus comprising:
a manipulator comprising a base, a first link connected to the base via a first joint such that the first link is rotatable around a first axis, a second link connected to the first link via a second joint such that the second link is rotatable around a second axis, wherein the first axis and the second axis are arranged at a distance from each other, and a gripping arrangement connected to the second link and arranged to grip and hold a container;
a first drive unit arranged to rotate the first link around the first axis;
a second drive unit arranged to rotate the second link around the second axis;
a third drive unit arranged to activate the gripping arrangement to grip and hold respectively release the container;
a container infeed station arranged to provide the container to the gripping arrangement of the manipulator;
a container emptying station arranged to receive a content emptied from the container by the manipulator into a food package; and
a container outfeed station arranged to receive the container when released from the gripping arrangement of the manipulator,
wherein the container, when gripped and held by the gripping arrangement, is movable between the container infeed station, the container emptying station and the container outfeed station by rotating the first and second links around their respective axes,
wherein the manipulator is arranged to position the container vertically at the container infeed station and at the container outfeed station.

Throughout the application text, the term "content" is also referred to as "food product" or "type of food product".

The apparatus is arranged for filling food packages with food product. The apparatus is especially arranged for filling food packages with food product, wherein the food product is a food product which comprises large ingredients or pieces, sticky ingredients or a mix of ingredients. These types of food products may be difficult to fill into food packages when using filling machines or apparatuses known in the art because of characteristics of the food product, i.e., large, sticky or a mixture. By way of examples, these type of food product may be large meatballs, cut bamboo shoots and fruit cocktail. Therefore, the disclosed apparatus is advantageous as it allows for filling different types of food product in food packages in an easy and efficient way. The food package may comprise a material that is made of fiber.

In this context, in which the container is vertically arranged at the container infeed station and at the container outfeed station, is here meant that the container is arranged with a top of the container upwards and a bottom of the container downwards, i.e., the container is arranged in the same way at the container infeed station and at the container outfeed station. In other words, the container is upright at the container infeed station and at the container outfeed station. This is advantageous as it allows for counteracting that any food product may be poured out at the container infeed station and/or the container outfeed station.

The container is arranged in way deviating from the vertical position, i.e., the upright position, when the container is at the container emptying station such that the container is able to empty the content into the food package in an easy and efficient way. The container is arranged typically arranged upside-down or substantially upside-down when the container is at the container emptying station. The apparatus is advantageous as it allows for emptying food product from the container into the food packages by means of the manipulator and the different drive units. The respective drive units may be actuated in different ways depending on e.g. the type of food product that should be emptied from the container into the food package. The container has to be moved in a way such that the content stays in the container until the container has reached the container emptying station. Thereby, the speed of the movement of the container as well as the tilting of the container is typically tailored based on the type of food product of the container such that the food product stays in the container although the container is moved away from its vertical position and typically turned more or less upside-down at when reaching the container emptying station. Thus, it should be understood by the skilled person that the container has to be rotated form the vertical position when being moved towards the container emptying station such that the content is able to be emptied from the container into the food package in an easy and efficient way. By way of example, the first drive unit may be a stepper motor, a DC motor, an AC motor, a brushed motor, a brushless moto, a servo motor, a hydraulic motor, a pneumatic motor. By way of example, the second drive unit may be a stepper motor, a DC motor, an AC motor, a brushed motor, a brushless moto, a servo motor, a hydraulic motor, a pneumatic motor. By way of example, the third drive unit may be a linear motor, a pneumatic motor or hydraulic motor. It should however be noted that these drive units should only be seen as examples and other types of drive units may be used as well.

By way of example, the first and second links may be individually rotatable with respect to each other. With such a design, where the manipulator comprises two links and where the links are individually rotatable with respect to each other, the provision of actuating the respective link in an accurate and easy way is achieved. This is further advantageous as it allows for controlling the movement of the container in an exact and easy way such that the content will be emptied into the food package in an efficient way. Thus, with such a design, it is possible to actuate the respective link dependent on the type of food product such that preferably all food product or a large majority of the container is emptied into the food package at the container emptying station.

The movement of the manipulator from the container infeed station, to the container emptying station, to the container outfeed station and back to the container infeed station takes 1 to 10 seconds, preferably, 1 to 5 seconds, more preferably 2 to 3 seconds. The rotational speed of the first and second links may be vary depending on the content that should be emptied to the food package at the container emptying station.

The container infeed station may be arranged above the container outfeed station seen in a vertical direction. This is advantageous as it allows for the apparatus to receive containers at the container infeed station and release containers at the container outfeed station in an easy way. The container infeed station and the container emptying station may be arranged at a distance from each other seen along a horizontal direction. This is advantageous as it allows for the container to be moved between the container infeed station and the container emptying station in an easy and efficient way.

The apparatus may further comprise a control unit connected to and configured to control the first, second and third drive units to cause the manipulator to:
grip and hold the container at the container infeed station by actuating the third drive unit;
move the gripped container from the container infeed station to the container emptying station by actuating the first and second drive units whereby the container is tilted such that the content thereof exits the container at the container emptying station and enters into the food package;
move the gripped container from the container emptying station to the container outfeed station by actuating the first and second drive units; and
release the gripped container at the container outfeed station by actuating the third drive unit.

This is advantageous as it allows for controlling the movement of the container in an easy and efficient way. This is further advantageous as it allows for controlling the movement of the container depending on the type of content in the container such that the content is kept in the container until the container reaches the container emptying station and such that the content exits the container into the food package at the container emptying station.

The control unit may be wired or wireless connected to the first drive unit and/or the second drive unit and/or the third drive unit. The control unit may be arranged to store different movements depending on the content of the container such that an operator of the apparatus may be able to choose a movement which is advantageous for the specific content such that the content is emptied in an easy, efficient but also accurate way.

The container infeed station may comprise a distributor wheel arranged to distribute the container into the container infeed station, the distributor wheel being rotatable about a third axis and comprising a plurality of seats, wherein each seat is configured to receive a respective container. This is advantageous as it allows for distributing the respective containers into the container infeed station in a controllable way. The seats are preferably evenly distributed along a circumference of the distributor wheel such that the containers are evenly distributed into the container infeed station. The distributor wheel is preferably arranged to distribute the containers into the container infeed station in a first direction.

The container infeed station may comprise an input pushing device arranged to push, towards the manipulator, the container which has been distributed into the container infeed station by the distributor wheel. This is advantageous as it allows for controlling the movement of the container from the distributor wheel towards the manipulator in an efficient way. The input pushing device may be arranged to push one or more container towards the manipulator at the time. The apparatus may comprise one or more input pushing devices. If the apparatus comprises more than one input pushing device, the input pushing devices may be individually controlled. The input pushing device is preferably arranged to push the container in a second direction, being perpendicular the first direction, towards the manipulator.

The container infeed station may comprise an input stopping device arranged to be in an upper position or in a lower position, wherein, when the input stopping device is in the upper position, the input stopping device is arranged to prevent the container from moving towards the manipulator, and wherein, when the input stopping device is in the lower position, the input stopping device is arranged to permit the container to be moved towards the manipulator by the input pushing device, wherein the input stopping device is movable between the upper position and the lower position. Thus, the input stopping device is movable in a vertical direction between the upper and lower positions. This is advantageous as it allows for controlling the movement of the container in the infeed station in an easy way.

Preferably, the input pushing device is only pushing the container towards the manipulator when the input stopping device is in the lower position. Thus, the movement of the input pushing device depends on the position of the input stopping device. This is advantageous as it allows for the container to be moved towards the manipulator only when the input stopping device is in the lower position.

The input stopping device may have a height which is between 5 to 25% of a height of the container, preferably between 15 to 25% of the height of the container. This is advantageous as it allows for a safety mechanism within the apparatus if the input pushing device pushes the container towards the manipulator although the input stopping device is in the upper position. Thus, if the input stopping device is in the upper position and the input pushing device pushes the container towards the manipulator, the height of the input stopping device is able to permit the container to be moved towards the manipulator without, or at least with a reduced risk of pushing the container past the input stopping device.

The container infeed station may comprise a container stopping device arranged to restrict the movement of the container towards the manipulator and to define a position of the container at which the gripping arrangement is able to grip and hold the container. This is advantageous as it allows for placing the container in a desired position such that the gripping arrangement is able to grip and hold the container in an easy and efficient way. Moreover, the container will be stopped and e.g. prevented from falling down or tipping over by the container stopping device. The manipulator may be arranged to, when moving the container from the container infeed station towards the container emptying station, lift the container a height above the container infeed station, seen in the vertical direction, wherein the height is larger than a height of the container stopping device. This is advantageous as it allows for the container to be moved past the container stopping device without the need of moving the container stopping device. Thus, the container stopping device is typically a stationary container stopping device.

This is further advantageous as it allows to control how the container is distributed to the manipulator, i.e., with a desired time span etc.

The gripping arrangement may comprise a plurality of gripping units. Each gripping unit may be arranged to grip and hold a respective container. Thus, this is advantageous as it allows for the gripping arrangement to be able to grip and hold a plurality of containers at the same time. The gripping units may be arranged one next to another such that if a plurality of containers are positioned one next to another, the gripping units are arranged to grip and hold a respective container. Thus, this is advantageous as it allows for the manipulator to move a plurality of containers between the container infeed station, the container emptying station and the container outfeed station at the time such that a more time-efficient but also cost-efficient solution is provided.

For each gripping unit of the plurality of gripping units, a container distributor path may be arranged to distribute the container towards the manipulator. This is advantageous as it allows for distributing the containers to each of the gripping units in an easy way such that each of the gripping units are provided with a container. The container distributor path may be a fan shaped container distributor path. With such a design, where the container distributor path is of the fan shaped container distributor path, the provision of separating the containers a bit further, seen in the first direction, before the gripping arrangement grips and holds the container, is achieved in an easy way with a reduce risk of the gripping units or the containers to come in contact with other components of the apparatus, i.e., adjacent containers or gripping units. In other words, a fan shaped container distributor path may efficiently separate and spread out containers as the containers are moving towards the respective gripping units of the manipulator.

Each gripping unit may comprise a fixed gripping finger and a movable gripping finger, wherein the gripping fingers may be arranged to grip and hold the container therebetween and to engage a recess on an exterior surface of the container.

Thus, the exterior surface of the container may be provided with one or more recesses such that the respective gripping units are able to grip and hold the container in a safe way with a reduced risk of losing the container when moving the container between the different stations of the apparatus. An interior surface of the container may be provided with one or more recesses. Preferably, the exterior surface and the interior surface are provided with the same recesses which are provided on both the exterior and the interior surfaces. For instance, the walls of the container may be corrugated, partially corrugated or else patterned. With such a design, in which the interior surface of the container is provided with one or more recesses, the content may be able to be emptied from the container with a reduce risk of getting stuck to inside wall portions of the container compared to solutions in which no recesses are provided. Thus, the recesses are advantageous both to improve the engagement between the container and the gripping fingers but also to simplify the emptying of the content from the container.

With such a design, in which the gripping unit comprises a fixed gripping finger and a movable gripping finger, the step of gripping the container is provided in a controllable way. The fixed gripping finger may be arranged to keep the container in place when the movable finger is movable towards the container such that the gripping and holding of the container may take place. Moreover, owing from the fixed gripping finger, the container will typically be gripped in the same location.

The container emptying station may comprise a funnel for directing the content of the container into the food package, when the content of the container is emptied into the food package. This is advantageous as it allows for the content to be filled into the food package in a controllable way with a reduce risk of spilling any content outside the food package. By way of example, the funnel may be made of an embossed sheet of stainless steel.

The funnel may be defined by a funneling surface, and wherein a portion of the funneling surface which is facing away from the manipulator is higher than other portions of the funneling surface. This is advantageous as it allows for the content to be filled into the food package in a controllable way with a reduce risk of directing any content outside the food package.

When the gripping arrangement is at the container infeed station, the second link may be aligned with a container pick-up surface of the container infeed station and, when the gripping arrangement is at the container outfeed station, the second link may be aligned with a container release surface of the container outfeed station. This is advantageous as it allows for the gripping arrangement to grip and release the container at the respective surface in an efficient but also controllable way.

A major portion of the funneling surface may be arranged in an outwardly tilted positioned at an angle between 10 to 30 degrees in relation to a vertical direction of the funnel. With such a design, the provision of directing the content from the container into the food package in an easy way is achieved.

The movement of the gripped container from the container infeed station to the container emptying station may include rotating the first link and the second link around their respective axes such that the container is turned upside down, and
wherein, the movement of the gripped container from the container emptying station to the container outfeed station may include rotating the first link and the second link such that the container is turned upright and the distance between the first joint and the gripping arrangement is decreased such that the container is moved past the container infeed station before reaching the container outfeed station.

This is advantageous as the movements allows the container to be vertically positioned at the container infeed station and at the container outfeed station but turned upside down at the container emptying station. Thereby, the content is able to be emptied at the container emptying station into the food package but may stay in the container at the container infeed station and the container outfeed station (if there is any content left in the container which has not been emptied from the container at the container emptying station).

Each of the first drive unit and the second drive unit may comprise a respective drive axle that is coaxial with the first axis,
the drive axle of the first drive unit may be connected to the first link for rotating the first link around the first axis, and
a first drive wheel may be connected to the drive axle of the second drive unit and a second drive wheel that is coaxial with the second axis is connected to the second link, and a drive belt is arranged around the drive wheels for rotating the second link around the second axis.

This is advantageous as it allows for actuating the first and second links in an easy and exact way. This is further advantageous, as said above, it allows for the first and second links to be individually rotatable with respect to each other.

Still other objectives, features, aspects and advantages will appear from the following detailed description as well as from the drawings.

### Drawings

Embodiments will now be described, by way of example, with reference to the accompanying schematic drawings, in which
Fig. 1a-c are schematic simplified views of an apparatus for filling food packages.
Fig. 2 is a perspective view of an apparatus for filling food packages.
Fig. 3 is a side view of an apparatus for filling food packages.
Fig. 4 is a perspective view of a funnel.

### Description

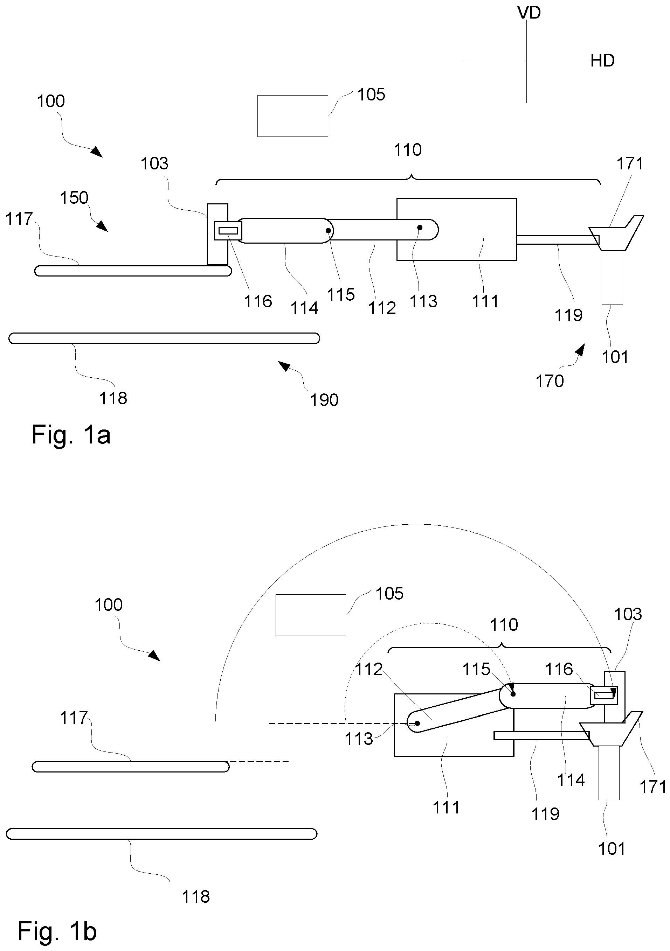

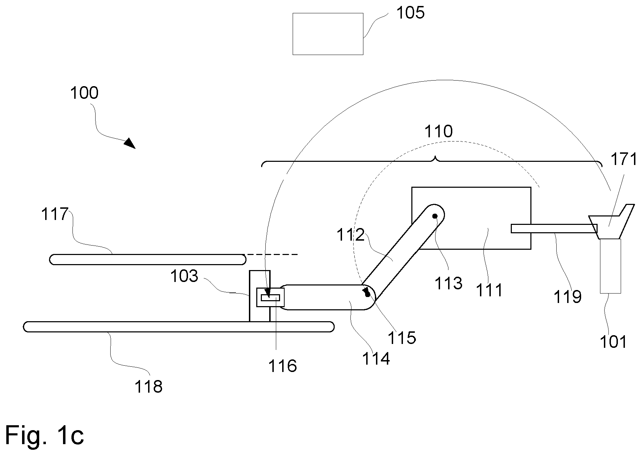

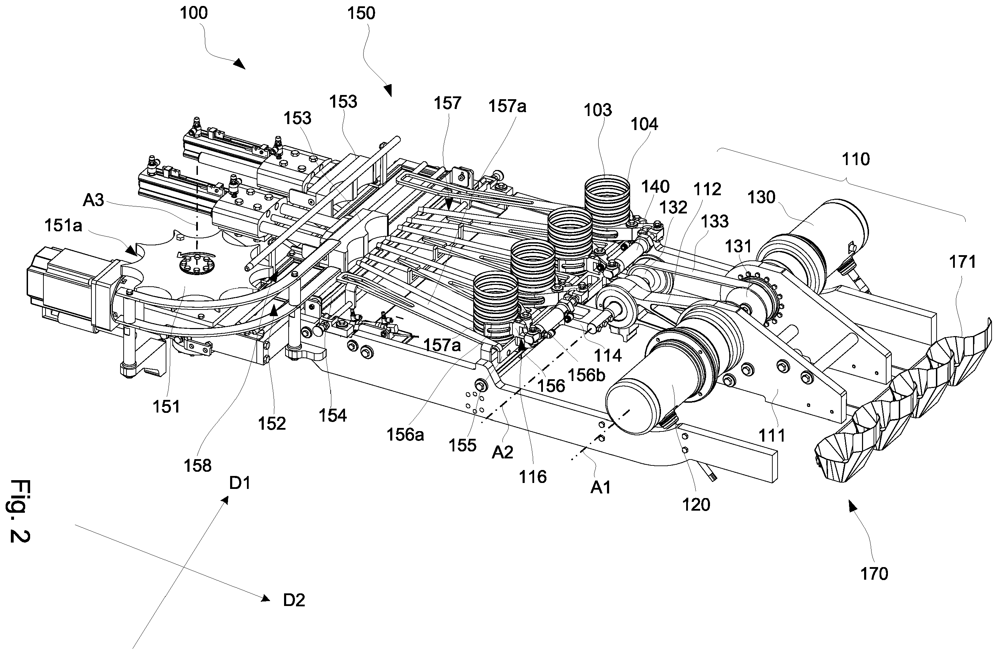

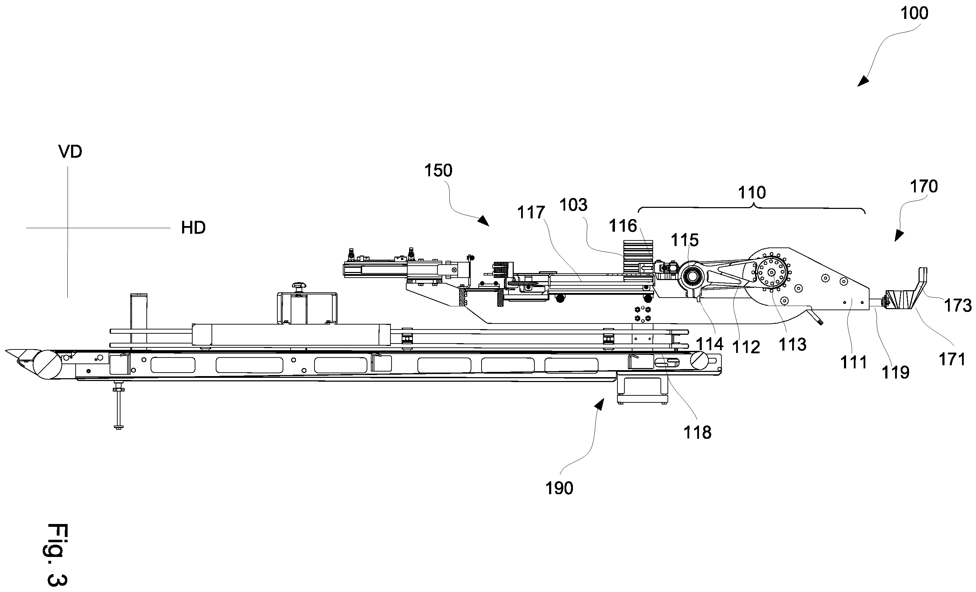

With reference to Fig 1a-c, an apparatus 100 for filling food packages 101 is illustrated by way of example. The apparatus 100 is arranged to move a container 103 between a container infeed station 150, a container emptying station 170 and a container outfeed station 190 of the apparatus 100. In Fig. 1, the apparatus 100 is illustrated in a simplified manner in which only parts relevant for understanding how the apparatus 100 is moving the container 103 between the different stations 150, 170, 190 is integrated in the apparatus 100. The apparatus 100 is illustrated in further detail in connection with Figs 2 and 3.

The apparatus 100 comprises a manipulator 110 arranged to move the container 103 between the different stations 150, 170, 190. The manipulator 110 comprises a base 111, a first link 112 and a second link 114. The first link 112 is connected to the base 111 via a first joint 113 such that the first link 112 is rotatable around a first axis A1 (illustrated in Fig. 2). The second link 114 is connected to the first link 112 via a second joint 115 such that the second link 114 is rotatable around a second axis A2 (illustrated in Fig. 2). As best illustrated in Fig. 2, the first and second axes A1, A2 are arranged at a distance from each other.

The apparatus 100 further comprises a gripping arrangement 116 arranged to grip and hold the container 103 respectively release the container 103. The gripping arrangement 116 is arranged to grip the container 103 at the container infeed station 150, to release the container 103 at the container outfeed station 190 and to hold the container 103 during movement between the container infeed station 150 and the container outfeed station 190. The gripping arrangement 116 is connected to the second link 114.

As best illustrated in Fig. 1a, the container infeed station 170 is arranged to provide the container 103 to the gripping arrangement 116. The container infeed station 150 comprises a container pick-up surface 117 at which the container 117 is fed to the gripping arrangement 116 such that the gripping arrangement 116 may grip the container 103. At the container infeed station 150, the container 103 is positioned vertically with a top of the container 103 upwards and a bottom of the container 103 downwards.

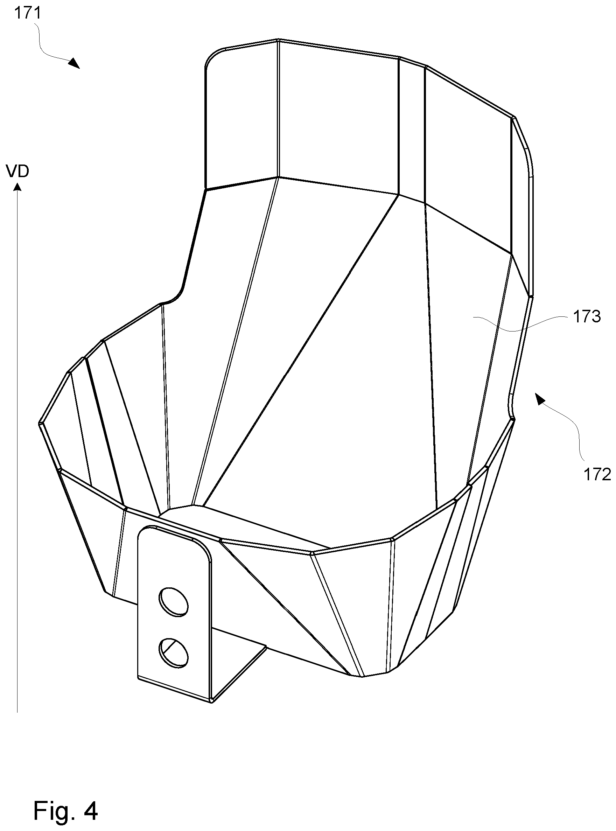

As best illustrated in Fig. 1b, the container 103 has been moved from the container infeed station 150 (as illustrated in Fig. 1a) to the container emptying station 170 at which content of the container 103 is emptied into the food package 101. The container emptying station 170 comprises a funnel 171 arranged to receive the content from the container 103 and to direct the content into the food package 101. The funnel 171 is connected to the base 111 via a connecting element 119. The funnel 171 is illustrated in further detail in connection with Fig. 4. The movement of the container 103 from the container infeed station 150 to the container emptying station 170 includes rotating the first link 112 and the second link 114 around their respective axes A1, A2 such that the container 103 is turned upside down. Thereby, when the container 103 reaches the container emptying station 170, the container 103 has rotated 180 degrees. It should be noted that the container 103 may rotate less than 180 degrees or more than 180 degrees as long as the content of the container 103 is able to be emptied in the food package 101 at the container emptying station 150. In this context, the rotation of the first link 112 and the rotation of the second link 114 are both defined with respect to a horizontal plane. In other words, if the second link 114 is kept fixed with respect to the first link 112, the second link 114 will rotate 0 degrees with respect to the second joint 115 but will rotate the same angle as the first link 112 with respect to the horizontal plane. By way of example, the first link 112 is rotated between 165 to 175 degrees about the first axis and the second link 114 is rotated approximately 180 degrees about the second axis A2 when moving the container 103 between the container infeed station 150 and the container emptying station 170. The first link 112 may rotate about the first axis A1 with a speed between 1000 and 1400 degrees/s and the second link 114 may rotate about the second axis A2 with a speed between 800 and 1200 degrees/s.

The container infeed station 150 and the container emptying station 170 are arranged at a distance from each other seen along a horizontal direction HD.

As best illustrated in Fig. 1c, the container 103 has been moved from the container emptying station 150 (as illustrated in Fig. 1b) to the container outfeed station 190 at which the container 103 is released from the gripping arrangement 116. The container outfeed station 190 is arranged to receive the container when released from the gripping arrangement 116. The movement of the container 103 from the container emptying station 170 to the container outfeed station 190 includes rotating the first link 112 and the second link 114 around their respective axes A1, A2 such that the container 103 is turned upright. Thereby, when the container 103 reaches the container outfeed station 190, the container 103 has rotated 180 degrees and is arranged in its vertical position again. It should be noted that the container 103 may rotate less than 180 degrees or more than 180 degrees as long as the content of the container 103 is able to be emptied in the food package 101 at the container emptying station 150 and as long as the container 103 is positioned vertically at the container outfeed station 190. The first and second links 112, 114 in the depicted figure are rotated between the container emptying station 170 and the container outfeed station 190 such that a common extension of the links 112, 114, seen along the horizontal direction HD, is smaller than the common extension of the links 112, 114 from the first axis A1 to the container infeed station 150 such that the container 103 is fed past the container infeed station 150 as depicted. By way of example, the first link 112 is rotated between 230 to 250 degrees about the first axis and the second link 114 is rotated approximately 180 degrees about the second axis A2 when moving the container 103 between the container infeed station 150 and the container emptying station 170. The first link 112 may rotate about the first axis A1 with a speed between 1000 and 1400 degrees/s and the second link 114 may rotate about the second axis A2 with a speed between 800 and 1200 degrees/s.

The container infeed station 150 is arranged above the container outfeed station 190 seen in a vertical direction VD, i.e. the container pick-up surface 117 is arranged above the container release surface 118.

The apparatus 100 further comprises a control unit 105. The control unit 105 may be wired or wireless connected to the apparatus 100. The control unit 105 will be further discussed in connection with Fig. 2.

With reference to Figs 2 and 3, the apparatus 100 is illustrated in more detail by way of example. Fig. 2 illustrates a perspective view of the apparatus 100 and Fig. 3 illustrates a side view of the apparatus 100. The apparatus 100 of Fig. 2 and Fig. 3 comprises the same features although not all features are illustrated in both figures.

With reference to Fig. 2, the container infeed station 150 comprises a distributor wheel 151 arranged to distribute the container 103 into the container infeed station 150. As depicted in figure 2, the distributor wheel 151 comprises ten seats 151a, wherein each seat 151a is configured to receive a respective container 103. It should be noted that the distributor wheel 151 may comprise more than ten seats 151a or less than ten seats 151a. The distributor wheel 151 is rotatable about a third axis A3 such that the respective container 103 is distributed into the container infeed station 150. When the distributor wheel has distributed the container 103 to the container infeed station 150, the following container 103, i.e., the next container 103 which is distributed to the container infeed station 150, may push the container 103 forward in a first direction D1 and so forth. Thus, the following container 103 distributed to the container infeed station 150 by the distributor wheel 151 will push the container 103 in front of the following container forward. The distributor wheel 151 is arranged to distribute the container 103 by having the following container which pushes the container 103 in front of the following container forward to a container path 158 along the first direction D1. When the container 103 is fed along the container path 158, an input pushing device 153 of the container infeed station 150 is arranged to push the container 103 in a second direction D2, being perpendicular to the first direction D1, towards the manipulator 110. As depicted in Fig. 2, the container infeed station 150 comprises two input pushing devices 153, wherein each input pushing device 153 comprises two seats 153a. The respective seat 153a is arranged to receive and push a respective container 103 towards the manipulator 110. Hence, the depicted input pushing device 153 is arranged to push four containers 103 towards the manipulator 110 at the same time.

The container infeed station 150 comprises an input stopping device 154 arranged to be in an upper position or in a lower position. When the input stopping device 154 is in the upper position (as illustrated in Fig. 2), the input stopping device 154 prevents the container 103 from moving towards the manipulator 110. When the input stopping device 154 is in the lower position, the input stopping device 154 is arranged to permit the container 103 to be moved towards the manipulator 110 by the input pushing device 153. The input stopping device 154 is movable between the upper and lower positions. When the input stopping device 154 is in the lower position, the input pushing device 153 is arranged to push the container 103 to a container distributor path 157. Each seat 153a of the container pushing device 153 is arranged to push the container 103 into a respective path 157a of the container distributer path 157, wherein the respective path 157a of the container distributer path 157 distributes the container 103 towards the manipulator 110. As depicted in Fig. 2, the container distributor path 157 comprises four paths 157a. It should however be noted that the apparatus 100 may comprise more than four paths or less than four paths. At an end portion of the container distributor path 157, there is provided a container stopping device 155 being part of the container infeed station 150. The container stopping device 155 is arranged to restrict the movement of the container 103 towards the manipulator 110. The container stopping device 155 is also arranged to define a position of the container 103 at which the gripping arrangement 116 is able to grip and hold the container 103. The container stopping device 155 is a stationary stopping device and hence, the gripping arrangement 116 has to lift the container 103 above the container stopping device 155 when moving the container 103 towards the container emptying station 170. As depicted in Fig. 2, four containers 103 are positioned at the end of the respective path 157a, by the container stopping device 155. Each container 103 comprises recesses on an exterior surface of the container 103. As illustrated, each container may also comprise recesses on an interior surface of the container 103.

Further, the gripping arrangement 116 comprises a four gripping units 156, wherein each gripping unit 156 is arranged to grip and hold the container 103. It should however be noted that the gripping arrangement 116 may comprise more than four gripping units or less than four gripping units. Each gripping unit 156 comprises a fixed gripping finger 156a and a movable gripping finger 156b. The gripping fingers 156a, 156b are arranged to grip and hold the container 103 therebetween and to engage one of the recesses 104 on the exterior surface of the container 103.

Thus, as depicted in Fig. 2, the input pushing device 153, the container distributor path 157 and the gripping units 156 are provided to distribute four containers 103 towards the manipulator 110 in parallel. It should however be noted that the apparatus 100 may be scaled up, or down, but work in a similar way as discussed above, if more than four containers 103, or less than four containers 103, should be distributed at the same time. It should further be noted that only one of the two depicted input pushing devices 153 may be actuated at the same time such that only two containers 103 may be distributed towards the manipulator 103 in parallel.

The apparatus 100 comprises a first drive unit 120 arranged to rotate the first link 112 around the first axis A1. The apparatus 100 comprises a second drive unit 130 arranged to rotate the second link 114 around the second axis A2. The apparatus 100 comprises a third drive unit 140 arranged to activate the gripping arrangement 116 to grip and hold respectively release the container 180 at the container infeed station 150 respectively at the container outfeed station 190.

The first drive unit 120 comprises a drive axle that is coaxial with the first axis A1, wherein the drive axle is connected to the first link 112 for rotating the first link 112 around the first axis A1. The second drive unit 130 comprises a drive axle that is coaxial with the first axis A1, wherein a first drive wheel 131 is connected to the drive axle of the second drive unit 130. A second drive wheel 132 that is coaxial with the second axis A2 is connected to the second link 114. A drive belt 133 is arranged around the drive wheels 131, 132 for rotating the second link 114 around the second axis A2.

As introduced in connection with Fig. 1, the apparatus 100 also comprises the control unit 105. The control unit 105 may be wired or wireless connected to the first, second and third drive units 120, 130, 140. The control unit 105 is arranged to control the first, second and third drive unit 120, 130, 140 to cause the manipulator 110 to grip and hold the container 103 at the container infeed station 150, as previously discussed, by actuating the third drive unit 140. The control unit 105 is further arranged to cause the manipulator 110 to move the gripped container 103 from the container infeed station 150 to the container emptying station 170, as previously discussed, by actuating the first and second drive units 120, 130. Thereby, the container 103 is tilted such that the content thereof exits the container 103 at the container emptying station 170 and enters into the food package 101. The control unit 105 is further arranged to cause the manipulator 110 to move the gripped container 103 from the container emptying station 170 to the container outfeed station 190 by actuating the first and second drive units 120, 130 and release the gripped container 103 at the container outfeed station 190, as previously discussed, by actuating the third drive unit 140. The control unit 105 may be wired or wireless connected to the other components of the apparatus 100 such that the control unit 105 may control such other components. The control unit 105 may for instance control a motion of the distributor wheel 151 and/or a motion of the input pushing device 153 and/or a motion of the input stopping device 154.

With reference to Fig. 4, the funnel 171 of the container emptying station 170 is illustrated in further detail by way of example. The funnel 171 is arranged to direct the content of the container 103 into the food package 101, when the content of the container 103 is emptied into the food package 101. The funnel 171 is defined by a funneling surface 172. A portion 173 of the funneling surface 172 which is facing away from the manipulator 119 is higher than other portions of the funneling surface 172. A major portion of the funneling surface 172 is arranged in an outwardly tilted position. By way of example, the major portion of the funneling surface 172 is arranged in the outwardly tilted position at an angle between 10 to 30 degrees in relation to a vertical direction VD of the funnel 171. The funneling surface 172 or portions thereof may be embossed to counteract sticking of food product thereto.

From the description above follows that, although various embodiments of the invention have been described and shown, the invention is not restricted thereto, but may also be embodied in other ways within the scope of the subject-matter defined in the following claims.

## Claims

1. An apparatus (100) for filling food packages (101), the apparatus (100) comprising:
a manipulator (110) comprising a base (111), a first link (112) connected to the base (111) via a first joint (113) such that the first link (112) is rotatable around a first axis (A1), a second link (114) connected to the first link (112) via a second joint (115) such that the second link (114) is rotatable around a second axis (A2), wherein the first axis (A1) and the second axis (A2) are arranged at a distance from each other, and a gripping arrangement (116) connected to the second link (114) and arranged to grip and hold a container (103);
a first drive unit (120) arranged to rotate the first link (112) around the first axis (A1);
a second drive unit (130) arranged to rotate the second link (114) around the second axis (A2);
a third drive unit (140) arranged to activate the gripping arrangement (116) to grip and hold respectively release the container (103);
a container infeed station (150) arranged to provide the container (103) to the gripping arrangement (116) of the manipulator (110);
a container emptying station (170) arranged to receive a content emptied from the container (103) by the manipulator (110) into a food package (101); and
a container outfeed station (190) arranged to receive the container (103) when released from the gripping arrangement (116) of the manipulator (110),
wherein the container (103), when gripped and held by the gripping arrangement (116), is movable between the container infeed station (150), the container emptying station (170) and the container outfeed station (190) by rotating the first and second links (112, 114) around their respective axes (A1, A2),
wherein the manipulator is arranged to position the container (103) vertically at the container infeed station (150) and at the container outfeed station (190).

2. The apparatus (100) according to claim 1, further comprising a control unit (105) connected to and configured to control the first, second and third drive units (120, 130, 140) to cause the manipulator (110) to:
grip and hold the container (103) at the container infeed station (150) by actuating the third drive unit (140);
move the gripped container (103) from the container infeed station (150) to the container emptying station (170) by actuating the first and second drive units (120, 130) whereby the container (103) is tilted such that the content thereof exits the container (103) at the container emptying station (170) and enters into the food package (101);
move the gripped container (103) from the container emptying station (170) to the container outfeed station (190) by actuating the first and second drive units (120, 130); and
release the gripped container (103) at the container outfeed station (190) by actuating the third drive unit (140).

3. The apparatus (100) according to claim 1 or 2, wherein the container infeed station (150) comprises a distributor wheel (151) arranged to distribute the container (103) into the container infeed station (150), the distributor wheel (151) being rotatable about a third axis (A3) and comprising a plurality of seats (151a), wherein each seat (151a) is configured to receive a respective container (103).

4. The apparatus (100) according to claim 3, wherein the container infeed station (150) comprises an input pushing device (153) arranged to push, towards the manipulator (110), the container (103) which has been distributed into the container infeed station (150) by the distributor wheel (151).

5. The apparatus (100) according to claim 4, wherein the container infeed station (150) comprises a input stopping device (154) arranged to be in an upper position or in a lower position, wherein, when the input stopping device (154) is in the upper position, the input stopping device (154) is arranged to prevent the container (103) from moving towards the manipulator (110), and wherein, when the input stopping device (154) is in the lower position, the input stopping device (154) is arranged to permit the container (103) to be moved towards the manipulator (110) by the input pushing device (153), wherein the input stopping device (154) is movable between the upper position and the lower position.

6. The apparatus (100) according to any one of the preceding claims, wherein the container infeed station (150) comprises a container stopping device (155) arranged to restrict the movement of the container (103) towards the manipulator (110) and to define a position of the container (103) at which the gripping arrangement (116) is able to grip and hold the container (103).

7. The apparatus (100) according to any one of the preceding claims, wherein the gripping arrangement (116) comprises a plurality of gripping units (156).

8. The apparatus (100) according to claim 7, wherein the container infeed station (150) comprises, for each gripping unit (156) of the plurality of gripping units (156), a container distributor path (157) arranged to distribute the container (103) towards the manipulator (110).

9. The apparatus according to claim 7, wherein each gripping unit (156) comprises a fixed gripping finger (156a) and a movable gripping finger (156b), wherein the gripping fingers (156a, 156b) are arranged to grip and hold the container (103) therebetween and to engage a recess (104) on an exterior surface of the container (103).

10. The apparatus according to any one of the preceding claims, wherein the container emptying station (170) comprises a funnel (171) for directing the content of the container (103) into the food package (101), when the content of the container (103) is emptied into the food package (101).

11. The apparatus according to claim 10, wherein the funnel (171) is defined by a funneling surface (172), and wherein a portion (173) of the funneling surface (172) which is facing away from the manipulator (110) is higher than other portions of the funneling surface (172).

12. The apparatus according to claim 10 or 11, wherein, when the gripping arrangement (116) is at the container infeed station (150), the second link (114) is aligned with a container pick-up surface (117) of the container infeed station (150) and, when the gripping arrangement (116) is at the container outfeed station (190), the second link (114) is aligned with a container release surface (118) of the container outfeed station (190).

13. The apparatus according to any one of claims 10 to 12, wherein a major portion of the funneling surface (172) is arranged in an outwardly tilted position at an angle between 10 to 30 degrees in relation to a vertical direction (VD) of the funnel (171).

14. The apparatus according to any one of the preceding claims, wherein the movement of the gripped container (103) from the container infeed station (150) to the container emptying station (170) includes rotating the first link (112) and the second link (114) around their respective axes (A1, A2) such that the container (103) is turned upside down, and
wherein, the movement of the gripped container (103) from the container emptying station (170) to the container outfeed station (190) includes rotating the first link (112) and the second link (114) such that the container (103) is turned upright and the distance between the first joint (113) and the gripping arrangement (116) is decreased such that the container (103) is moved past the container infeed station (150) before reaching the container outfeed station (190).

15. The apparatus according to any one of the preceding claims, wherein
each of the first drive unit (120) and the second drive unit (130) comprises a respective drive axle that is coaxial with the first axis (A1),
the drive axle of the first drive unit (120) is connected to the first link (112) for rotating the first link (112) around the first axis (A1), and
a first drive wheel (131) is connected to the drive axle of the second drive unit (130) and a second drive wheel (132) that is coaxial with the second axis (A2) is connected to the second link (114), and a drive belt (133) is arranged around the drive wheels (131, 132) for rotating the second link (114) around the second axis (A2).

## Patentansprüche

1. Vorrichtung (100) zum Füllen von Nahrungsmittelpackungen (101), wobei die Vorrichtung (100) Folgendes umfasst:
einen Manipulator (110), der eine Basis (111), ein erstes Verbindungsglied (112), das über ein erstes Gelenk (113) mit der Basis (111) verbunden ist, so dass das erste Verbindungsglied (112) um eine erste Achse (A1) drehbar ist, ein zweites Verbindungsglied (114), das über ein zweites Gelenk (115) mit dem ersten Verbindungsglied (112) verbunden ist, so dass das zweite Verbindungsglied (114) um eine zweite Achse (A2) drehbar ist, wobei die erste Achse (A1) und die zweite Achse (A2) in einem Abstand zueinander angeordnet sind, und eine Greifanordnung (116) umfasst, die mit dem zweiten Verbindungsglied (114) verbunden und zum Greifen und Halten eines Behälters (103) angeordnet ist,
eine erste Antriebseinheit (120), die zum Drehen des ersten Verbindungsglieds (112) um die erste Achse (A1) angeordnet ist,
eine zweite Antriebseinheit (130), die zum Drehen des zweiten Verbindungsglieds (114) um die zweite Achse (A2) angeordnet ist,
eine dritte Antriebseinheit (140), die zum Aktivieren der Greifanordnung (116) angeordnet ist, um den Behälter (103) zu ergreifen und zu halten bzw. freizugeben,
eine Behältereingabestation (150), die dazu angeordnet ist, den Behälter (103) der Greifanordnung (116) des Manipulators (110) bereitzustellen,
eine Behälterentleerungsstation (170), die dazu angeordnet ist, einen Inhalt, der von dem Manipulator (110) aus dem Behälter (103) entleert wird, in eine Nahrungsmittelpackung (101) aufzunehmen, und
eine Behälterausgabestation (190), die zur Aufnahme des Behälters (103) angeordnet ist, wenn dieser von der Greifanordnung (116) des Manipulators (110) freigegeben worden ist,
wobei der Behälter (103), wenn er von der Greifanordnung (116) ergriffen und gehalten wird, durch Drehen des ersten und des zweiten Verbindungsglieds (112, 114) um ihre jeweiligen Achsen (A1, A2) zwischen der Behältereingabestation (150), der Behälterentleerungsstation (170) und der Behälterausgabestation (190) bewegbar ist,
wobei der Manipulator zum vertikalen Positionieren des Behälters (103) an der Behältereingabestation (150) und an der Behälterausgabestation (190) angeordnet ist.

2. Vorrichtung (100) nach Anspruch 1, ferner umfassend eine Steuereinheit (105), die mit der ersten, zweiten und dritten Antriebseinheit (120, 130, 140) verbunden und zu deren Steuerung ausgestaltet ist, um zu veranlassen, dass der Manipulator (110):
den Behälter (103) durch Betätigen der dritten Antriebseinheit (140) an der Behältereingabestation (150) ergreift und hält,
den ergriffenen Behälter (103) durch Betätigen der ersten und der zweiten Antriebseinheit (120, 130) von der Behältereingabestation (150) zu der Behälterentleerungsstation (170) bewegt, wodurch der Behälter (103) so geneigt wird, dass sein Inhalt an der Behälterentleerungsstation (170) aus dem Behälter (103) austritt und in die Nahrungsmittelpackung (101) eintritt, den ergriffenen Behälter (103) durch Betätigen der ersten und der zweiten Antriebseinheit (120, 130) von der Behälterentleerungsstation (170) zu der Behälterausgabestation (190) bewegt und
den ergriffenen Behälter (103) durch Betätigen der dritten Antriebseinheit (140) an der Behälterausgabestation (190) freigibt.

3. Vorrichtung (100) nach Anspruch 1 oder 2, wobei die Behältereingabestation (150) ein Verteilerrad (151) umfasst, das zum Verteilen des Behälters (103) in die Behältereingabestation (150) angeordnet ist, wobei das Verteilerrad (151) um eine dritte Achse (A3) drehbar ist und eine Vielzahl von Sitzen (151a) umfasst, wobei jeder Sitz (151a) zur Aufnahme eines jeweiligen Behälters (103) ausgestaltet ist.

4. Vorrichtung (100) nach Anspruch 3, wobei die Behältereingabestation (150) eine Eingabeschiebevorrichtung (153) umfasst, die dazu angeordnet ist, den Behälter (103), der durch das Verteilerrad (151) in die Behältereingabestation (150) verteilt worden ist, zu dem Manipulator (110) hin zu schieben.

5. Vorrichtung (100) nach Anspruch 4, wobei die Behältereingabestation (150) eine Eingabestoppvorrichtung (154) umfasst, die so angeordnet ist, dass sie sich in einer oberen Position oder in einer unteren Position befindet, wobei, wenn sich die Eingabestoppvorrichtung (154) in der oberen Position befindet, die Eingabestoppvorrichtung (154) so angeordnet ist, dass sie ein Bewegen des Behälters (103) zu dem Manipulator (110) hin verhindert, und wobei, wenn sich die Eingabestoppvorrichtung (154) in der unteren Position befindet, die Eingabestoppvorrichtung (154) so angeordnet ist, dass sie ein Bewegen des Behälters (103) durch die Eingabeschiebevorrichtung (153) zu dem Manipulator (110) hin gestattet, wobei die Eingabestoppvorrichtung (154) zwischen der oberen Position und der unteren Position bewegbar ist.

6. Vorrichtung (100) nach einem der vorhergehenden Ansprüche, wobei die Behältereingabestation (150) eine Behälterstoppvorrichtung (155) umfasst, die so angeordnet ist, dass sie die Bewegung des Behälters (103) zu dem Manipulator (110) hin beschränkt und eine Position des Behälters (103) definiert, an der die Greifanordnung (116) den Behälter (103) ergreifen und halten kann.

7. Vorrichtung (100) nach einem der vorhergehenden Ansprüche, wobei die Greifanordnung (116) eine Vielzahl von Greifeinheiten (156) umfasst.

8. Vorrichtung (100) nach Anspruch 7, wobei die Behältereingabestation (150) für jede Greifeinheit (156) der Vielzahl von Greifeinheiten (156) einen Behälterverteilerweg (157) umfasst, der dazu angeordnet ist, den Behälter (103) zu dem Manipulator (110) hin zu verteilen.

9. Vorrichtung nach Anspruch 7, wobei jede Greifeinheit (156) einen feststehenden Greiffinger (156a) und einen beweglichen Greiffinger (156b) umfasst, wobei die Greiffinger (156a, 156b) dazu angeordnet sind, den Behälter (103) dazwischen zwischen sich zu ergreifen und zu halten und eine Aussparung (104) an einer Außenfläche des Behälters (103) in Eingriff zu nehmen.

10. Vorrichtung nach einem der vorhergehenden Ansprüche, wobei die Behälterentleerungsstation (170) einen Trichter (171) zum Lenken des Inhalts des Behälters (103) in die Nahrungsmittelpackung (101) umfasst, wenn der Inhalt des Behälters (103) in die Nahrungsmittelpackung (101) entleert wird.

11. Vorrichtung nach Anspruch 10, wobei der Trichter (171) durch eine Zusammenführfläche (172) definiert ist und wobei ein Abschnitt (173) der Zusammenführfläche (172), der dem Manipulator (110) abgewandt ist, höher als andere Abschnitte der Zusammenführfläche (172) ist.

12. Vorrichtung nach Anspruch 10 oder 11, wobei das zweite Verbindungsglied (114) auf eine Behälteraufnahmefläche (117) der Behältereingabestation (150) ausgerichtet ist, wenn sich die Greifanordnung (116) an der Behältereingabestation (150) befindet, und das zweite Verbindungsglied (114) auf eine Behälterfreigabefläche (118) der Behälterausgabestation (190) ausgerichtet ist, wenn sich die Greifanordnung (116) an der Behälterausgabestation (190) befindet.

13. Vorrichtung nach einem der Ansprüche 10 bis 12, wobei ein Hauptteil der Zusammenführfläche (172) in einer nach außen geneigten Position in einem Winkel zwischen 10 bis 30 Grad in Bezug auf eine vertikale Richtung (VD) des Trichters (171) angeordnet ist.

14. Vorrichtung nach einem der vorhergehenden Ansprüche, wobei die Bewegung des ergriffenen Behälters (103) von der Behältereingabestation (150) zu der Behälterentleerungsstation (170) das Drehen des ersten Verbindungsglieds (112) und des zweiten Verbindungsglieds (114) um ihre jeweiligen Achsen (A1, A2) aufweist, so dass der Behälter (103) umgestülpt wird, und
wobei die Bewegung des ergriffenen Behälters (103) von der Behälterentleerungsstation (170) zu der Behälterausgabestation (190) ein Drehen des ersten Verbindungsglieds (112) und des zweiten Verbindungsglieds (114) aufweist, so dass der Behälter (103) aufrecht gedreht wird und der Abstand zwischen dem ersten Gelenk (113) und der Greifanordnung (116) verringert wird, so dass der Behälter (103) an der Behältereingabestation (150) vorbei bewegt wird, bevor er die Behälterausgabestation (190) erreicht.

15. Vorrichtung nach einem der vorhergehenden Ansprüche, wobei die erste Antriebseinheit (120) und die zweite Antriebseinheit (130) jeweils eine jeweilige Antriebsachse umfasst, die zu der ersten Achse (A1) koaxial ist,
die Antriebsachse der ersten Antriebseinheit (120) mit dem ersten Verbindungsglied (112) verbunden ist, um das erste Verbindungsglied (112) um die erste Achse (A1) zu drehen, und
ein erstes Antriebsrad (131) mit der Antriebsachse der zweiten Antriebseinheit (130) verbunden ist und ein zweites Antriebsrad (132), das zu der zweiten Achse (A2) koaxial ist, mit dem zweiten Verbindungsglied (114) verbunden ist, und ein Antriebsriemen (133) um die Antriebsräder (131, 132) angeordnet ist, um das zweite Verbindungsglied (114) um die zweite Achse (A2) zu drehen.

## Revendications

1. Appareil (100) destiné à remplir des emballages alimentaires (101), l'appareil (100) comprenant :
un manipulateur (110) comprenant une base (111), une première biellette (112) reliée à la base (111) par une première articulation (113) de sorte que la première biellette (112) puisse tourner autour d'un premier axe (A1), une seconde biellette (114) reliée à la première biellette (112) par une seconde articulation (115) de sorte que la seconde biellette (114) puisse tourner autour d'un second axe (A2), le premier axe (A1) et le second axe (A2) étant disposés à distance l'un de l'autre, et un dispositif de préhension (116) relié à la seconde biellette (114) et conçu pour saisir et maintenir un récipient (103) ;
une première unité d'entraînement (120) conçue pour faire tourner la première biellette (112) autour du premier axe (A1) ;
une deuxième unité d'entraînement (130) conçue pour faire tourner la seconde biellette (114) autour du second axe (A2) ;
une troisième unité d'entraînement (140) conçue pour activer le dispositif de préhension (116) afin qu'il saisisse et maintienne, ou respectivement qu'il libère, le récipient (103) ;
un poste d'alimentation en récipients (150) conçu pour fournir le récipient (103) au dispositif de préhension (116) du manipulateur (110) ;
un poste de vidage de récipient (170) conçu pour recevoir un contenu vidé du récipient (103) par le manipulateur (110) dans un emballage alimentaire (101) ; et
un poste d'évacuation de récipients (190) conçu pour recevoir le récipient (103) lorsqu'il est libéré du dispositif de préhension (116) du manipulateur (110),
dans lequel le récipient (103), lorsqu'il est saisi et maintenu par le dispositif de préhension (116), peut être déplacé entre le poste d'alimentation en récipients (150), le poste de vidage de récipient (170) et le poste d'évacuation de récipients (190) par l'application d'une rotation aux première et seconde biellettes (112, 114) autour de leurs axes respectifs (A1, A2),
dans lequel le manipulateur est conçu pour positionner le récipient (103) verticalement au niveau du poste d'alimentation en récipients (150) et au niveau du poste d'évacuation de récipients (190).

2. Appareil (100) selon la revendication 1, comprenant en outre une unité de commande (105) reliée aux première, deuxième et troisième unités d'entraînement (120, 130, 140) et configurée pour les commander afin d'amener le manipulateur (110) à :
saisir et maintenir le récipient (103) au niveau du poste d'alimentation en récipients (150) en actionnant la troisième unité d'entraînement (140) ;
déplacer le récipient saisi (103) du poste d'alimentation en récipients (150) au poste de vidage de récipient (170) en actionnant les première et deuxième unités d'entraînement (120, 130), le récipient (103) étant incliné de façon à ce que son contenu sorte du récipient (103) au niveau du poste de vidage de récipient (170) et entre dans l'emballage alimentaire (101) ;
déplacer le récipient saisi (103) du poste de vidage de récipient (170) au poste d'évacuation de récipients (190) en actionnant les première et deuxième unités d'entraînement (120, 130) ; et
libérer le récipient saisi (103) au niveau du poste d'évacuation de récipients (190) en actionnant la troisième unité d'entraînement (140).

3. Appareil (100) selon la revendication 1 ou 2, dans lequel le poste d'alimentation en récipients (150) comprend une roue de distribution (151) conçue pour distribuer le récipient (103) dans le poste d'alimentation en récipients (150), la roue de distribution (151) pouvant tourner autour d'un troisième axe (A3) et comprenant une pluralité de sièges (151a), dans lequel chaque siège (151a) est configuré pour recevoir un récipient (103) respectif.

4. Appareil (100) selon la revendication 3, dans lequel le poste d'alimentation en récipients (150) comprend un dispositif de poussée d'introduction (153) conçu pour pousser, vers le manipulateur (110), le récipient (103) qui a été distribué dans le poste d'alimentation en récipients (150) par la roue de distribution (151).

5. Appareil (100) selon la revendication 4, dans lequel le poste d'alimentation en récipients (150) comprend un dispositif d'arrêt d'introduction (154) conçu pour être dans une position supérieure ou dans une position inférieure, dans lequel, lorsque le dispositif d'arrêt d'introduction (154) est dans la position supérieure, le dispositif d'arrêt d'introduction (154) est conçu pour empêcher le récipient (103) de se déplacer vers le manipulateur (110), et dans lequel, lorsque le dispositif d'arrêt d'introduction (154) est dans la position inférieure, le dispositif d'arrêt d'introduction (154) est conçu pour permettre au récipient (103) d'être déplacé vers le manipulateur (110) par le dispositif de poussée d'introduction (153), le dispositif d'arrêt d'introduction (154) étant déplaçable entre la position supérieure et la position inférieure.

6. Appareil (100) selon l'une quelconque des revendications précédentes, dans lequel le poste d'alimentation en récipients (150) comprend un dispositif d'arrêt de récipient (155) conçu pour restreindre le mouvement du récipient (103) vers le manipulateur (110) et pour définir une position du récipient (103) à laquelle le dispositif de préhension (116) est capable de saisir et de maintenir le récipient (103).

7. Appareil (100) selon l'une quelconque des revendications précédentes, dans lequel le dispositif de préhension (116) comprend une pluralité d'unités de préhension (156).

8. Appareil (100) selon la revendication 7, dans lequel le poste d'alimentation en récipients (150) comprend, pour chaque unité de préhension (156) de la pluralité d'unités de préhension (156), une voie de distribution de récipient (157) conçue pour distribuer le récipient (103) vers le manipulateur (110).

9. Appareil selon la revendication 7, dans lequel chaque unité de préhension (156) comprend un doigt de préhension fixe (156a) et un doigt de préhension mobile (156b), dans lequel les doigts de préhension (156a, 156b) sont conçus pour saisir et maintenir le récipient (103) entre eux et pour entrer en prise avec un renfoncement (104) sur une surface extérieure du récipient (103).

10. Appareil selon l'une quelconque des revendications précédentes, dans lequel le poste de vidage de récipient (170) comprend un entonnoir (171) pour diriger le contenu du récipient (103) vers l'emballage alimentaire (101), lorsque le contenu du récipient (103) est vidé dans l'emballage alimentaire (101).

11. Appareil selon la revendication 10, dans lequel l'entonnoir (171) est défini par une surface en entonnoir (172), et dans lequel une partie (173) de la surface en entonnoir (172) qui est tournée à l'opposé du manipulateur (110) est plus haute que d'autres parties de la surface en entonnoir (172).

12. Appareil selon la revendication 10 ou 11, dans lequel, lorsque le dispositif de préhension (116) se trouve au poste d'alimentation en récipients (150), la seconde biellette (114) est alignée avec une surface de prélèvement de récipient (117) du poste d'alimentation en récipients (150) et, lorsque le dispositif de préhension (116) se trouve au poste d'évacuation de récipients (190), la seconde biellette (114) est alignée avec une surface de libération de récipient (118) du poste d'évacuation de récipients (190).

13. Appareil selon l'une quelconque des revendications 10 à 12, dans lequel une partie majeure de la surface en entonnoir (172) est disposée dans une position inclinée vers l'extérieur selon un angle compris entre 10 et 30 degrés par rapport à une direction verticale (VD) de l'entonnoir (171).

14. Appareil selon l'une quelconque des revendications précédentes, dans lequel le déplacement du récipient (103) saisi depuis le poste d'alimentation en récipients (150) jusqu'au poste de vidage de récipient (170) comprend l'application d'une rotation à la première biellette (112) et à la seconde biellette (114) autour de leurs axes (A1, A2) respectifs de sorte que le récipient (103) soit retourné, et
le déplacement du récipient (103) saisi du poste de vidage de contenant (170) au poste d'évacuation de récipients (190) comprend l'application d'une rotation à la première biellette (112) et à la seconde biellette (114) de sorte que le récipient (103) soit orienté verticalement et que la distance entre la première articulation (113) et le dispositif de préhension (116) soit réduite de sorte que le récipient (103) passe devant le poste d'alimentation en récipients (150) avant d'atteindre le poste d'évacuation de récipients (190).

15. Appareil selon l'une quelconque des revendications précédentes, dans lequel chacune de la première unité d'entraînement (120) et de la deuxième unité d'entraînement (130) comprend un arbre d'entraînement respectif qui est coaxial avec le premier axe (A1), l'arbre d'entraînement de la première unité d'entraînement (120) est relié à la première biellette (112) pour faire tourner la première biellette (112) autour du premier axe (A1), et
une première roue d'entraînement (131) est reliée à l'arbre d'entraînement de la deuxième unité d'entraînement (130) et une seconde roue d'entraînement (132) coaxiale avec le second axe (A2) est reliée à la seconde biellette (114), et une courroie d'entraînement (133) est disposée autour des roues d'entraînement (131, 132) pour faire tourner la seconde biellette (114) autour du second axe (A2).
